(19) Europäisches Patentamt
European Patent Office
Office européen des brevets

(11) **EP 3 674 965 B1**

(12) **EUROPEAN PATENT SPECIFICATION**

(45) Date of publication and mention
of the grant of the patent:
**07.06.2023 Bulletin 2023/23**

(21) Application number: **19191016.5**

(22) Date of filing: **09.08.2019**

(51) International Patent Classification (IPC):
*G06K 7/10* *(2006.01)*    *G06K 7/14* *(2006.01)*
*G06T 5/00* *(2006.01)*

(52) Cooperative Patent Classification (CPC):
**G06K 7/1473; G06K 7/10811; G06K 7/10861;**
**G06K 7/1439; G06T 5/003; G06T 5/006;**
G06T 2207/10008

(54) **METHOD AND DEVICE FOR IDENTIFYING BARCODE ON CURVED SURFACE, AND SYSTEM FOR ESTABLISHING PHOTOVOLTAIC POWER STATION BY IDENTIFYING BARCODE**

VERFAHREN UND VORRICHTUNG ZUR IDENTIFIZIERUNG VON STRICHCODES AUF EINER GEKRÜMMTEN OBERFLÄCHE UND SYSTEM ZUR HERSTELLUNG EINER FOTOVOLTAISCHEN LEISTUNGSSTATION DURCH IDENTIFIZIERUNG VON STRICHCODES

PROCÉDÉ ET DISPOSITIF D'IDENTIFICATION DE CODE-BARRES SUR UNE SURFACE COURBE ET SYSTÈME D'ÉTABLISSEMENT D'UNE STATION D'ALIMENTATION PHOTOVOLTAÏQUE PAR IDENTIFICATION DE CODE-BARRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2018 CN 201811603572**

(43) Date of publication of application:
**01.07.2020 Bulletin 2020/27**

(73) Proprietor: **Sungrow Power Supply Co., Ltd.**
**Hefei, Anhui 230088 (CN)**

(72) Inventors:
• **CHEN, Gang**
**Hefei, Anhui 230088 (CN)**

• **LI, Teng**
**Hefei, Anhui 230088 (CN)**
• **XU, Sheng**
**Hefei, Anhui 230088 (CN)**

(74) Representative: **Zacco Norway AS**
**P.O. Box 488 Skøyen**
**0213 Oslo (NO)**

(56) References cited:
**CN-A- 104 057 719    US-A1- 2005 150 957**
**US-B1- 8 413 903**

## Description

### TECHNICAL FIELD

The present disclosure relates to the technical field of barcode identification, and in particular to a method and device for identifying a barcode on a curved surface, and a system for establishing a photovoltaic power station by scanning a barcode.

### BACKGROUND

With the development of photovoltaic power stations, smart energy and smart operation and maintenance become more and more popular. Smart operation and maintenance of a photovoltaic power station, which is more efficient, has become the mainstream. Smart operation and maintenance of a photovoltaic power station is based on identification of barcodes of the photovoltaic power station, that is, by connecting the photovoltaic power station to a cloud platform by identifying the barcodes.

In the conventional technology, a photovoltaic power station is established on a cloud platform by identifying barcodes (one-dimensional codes or two-dimensional codes) on communication modules provided in inverters through a smart terminal which is connected to the cloud platform. Due to the various shapes of the communication modules, some of the barcodes are attached to curved surfaces, and these barcodes cannot be identified on a same focal plane, due to blurred portions of the barcodes on the focal plane when it is identified.

US2005/150957A1 discloses a method of reading a bar code that has been distorted by its application to a curved surface. The method includes determining the radius of the curved surface and altering standard reading of the dimensions of bars and spaces of the bar code as a function of the distance from the center of the bar code for compensating for the distortion, so that the bar code is able to be read by a scanner. Further, US2005/150957A1 discloses a system for creating a compensated bar code from a desired standard bar code for applying the compensated bar code onto a curved surface. The system includes a means for determining the radius of the curved surface; and a means for changing the dimensions of bars and spaces of the standard bar code as a function of the distance from the center of the bar code on the curved surface, so that when the compensated bar code is applied to the curved surface, the compensated bar code has compensated for distortion caused by the curved surface and may be read by a scanner.

US8413903B1 discloses a method of reading a barcode on a curved surface, and specifically discloses algorithms that can account for variations in focus of the image, as may result in blur due to move movement or auto-focus features, and a process for correcting for any noise in a central set of rows or other portion of the image.

CN104057719A discloses a bar code printing method, device and system. A barcode pattern of a predetermined specification is projected onto a curved surface, a barcode projection image is obtained by projection transformation that is calculated according to a curved surface equation, and the barcode projection image is printed, so that the front view on the curved surface is equivalent to the original barcode shape to ensure the recognition effect.

### SUMMARY

A method and device for identifying a barcode on a curved surface, and a system for establishing a photovoltaic power station by identifying a barcode on a curved surface are provided according to the present disclosure, to solve the problem in the conventional technology of blurred portions of a barcode on a curved surface when the barcode is identified.

To achieve the above objective, the following technical solution is provided according to the present disclosure.

A method for identifying a barcode on a curved surface is provided. The method is applied to a device for identifying a barcode on a curved surface and includes: obtaining abstract information of a barcode on a curved surface to be identified and of an object to which the barcode on the curved surface is attached, where the abstract information characterizes the barcode on the curved surface and the object to which the barcode on the curved surface is attached and is used for establishing a mathematical model; establishing, based on the abstract information, the mathematical model for the barcode on the curved surface and the object to which the barcode on the curved surface is attached, where the mathematical model comprises a three-dimensional model and N cross-sectional models of the barcode on the curved surface and the object to which the barcode on the curved surface is attached, N is a positive integer, $N=Z/z$, Z represents a height of the barcode on the curved surface on the three-dimensional model in a direction perpendicular to the cross sections, and z represents a height of each of the N cross-sectional models in the direction perpendicular to the cross sections; mapping, according to a preset relationship, arcs of the barcode on the curved surface on the N cross-sectional models to line segments on a focal plane of the device for identifying a barcode on a curved surface respectively in an order in which the barcode on the curved surface is scanned, to obtain an image of the barcode on the curved surface on the focal plane; denoising the image of the barcode on the curved surface to obtain a processed image; and identifying the processed image of the curved on the curved surface.

In an embodiment, the mapping, according to a preset relationship, arcs of the barcode on the curved surface on cross sections of the mathematical model to line segments on a focal plane of the device for identifying a barcode on a curved surface respectively in an order in which the barcode on the curved surface is scanned, includes: establishing a coordinate system for any one of the N cross-sectional models, adding auxiliary lines for the cross-sectional model, and calculating the preset relationship, and mapping, according to the preset relationship, the arcs of the barcode on the curved surface on the cross-sectional model to the line segments on the focal plane in the order in which the barcode on the curved surface is scanned.

In an embodiment, the establishing a coordinate system for any one of the N cross-sectional models, adding auxiliary lines for the cross-sectional model, and calculating the preset relationship, includes:

establishing a coordinate system for any one of the N cross-sectional models, with a center of the cross-sectional model being an origin of the coordinate system, and the arc being symmetrical about a y-axis of the coordinate system,

determining the line segment on a focal line, the line segment being equal in length to the arc and symmetrical about the y-axis, and the focal line being a line at which the focal plane intersects the cross-sectional model,

obtaining a first auxiliary line by connecting an end point of the arc with an end point of the line segment on one side of the y-axis, and obtaining a second auxiliary line by connecting another end point of the arc with another end point of the line segment on another side of the y-axis,

taking an intersection point of the first auxiliary line and the second auxiliary line on the y-axis as an observation point $y_1$, and

obtaining an equation representing the preset relationship based on the observation point $y_1$ and a radius R of the cross-sectional model:

$$(1+\frac{(R+y_1)^2}{x'^2})\ x^2-\frac{2y_1(R+y_1)}{x'}x=R^2-y_1^2 \, ,$$

where x represents an x coordinate of each point of the arc, and x' represents an x coordinate of each point of the line segment.

A device for identifying a barcode on a curved surface is provided. The device includes an obtaining unit, a modeling unit, a mapping unit, a processing unit, and an identifying unit.

The obtaining unit is configured to obtain abstract information of a barcode on a curved surface to be identified and of an object to which the barcode on the curved surface is attached, where the abstract information characterizes the barcode on the curved surface and the object to which the barcode on the curved surface is attached and is used for establishing a mathematical model.

The modeling unit is configured to establish, based on the abstract information, the mathematical model for the barcode on the curved surface and the object to which the barcode on the curved surface is attached, where the mathematical model comprises a three-dimensional model and N cross-sectional models of the barcode on the curved surface and the object to which the barcode on the curved surface is attached, N is a positive integer, N=Z/z, Z represents a height of the barcode on the curved surface on the three-dimensional model in a direction perpendicular to the cross sections, and z represents a height of each of the N cross-sectional models in the direction perpendicular to the cross sections.

The mapping unit is configured to map, according to a preset relationship, arcs of the barcode on the curved surface on the N cross-sectional models to line segments on a focal plane of the device for identifying a barcode on a curved surface respectively in an order in which the barcode on the curved surface is scanned, to obtain an image of the barcode on the curved surface on the focal plane.

The processing unit is configured to denoise the image of the barcode on the curved surface to obtain a processed image.

The identifying unit is configured to identify the processed image of the barcode on the curved surface.

In an embodiment, the mapping unit includes a calculating module, and a mapping module.

The calculating module is configured to establish a coordinate system for any one of the N cross-sectional models, add auxiliary lines for the cross-sectional model, and calculate the preset relationship.

The mapping module is configured to map, according to the preset relationship, the arcs of the barcode on the curved surface on the cross-sectional model to the line segments on the focal plane in the order in which the barcode on the curved surface is scanned.

In an embodiment, the calculating module being configured to establish a coordinate system for any one of the N cross-sectional models, adding auxiliary lines for the cross-sectional model, and calculating the preset relationship, includes the calculating module being configured to:

establish a coordinate system for any one of the N cross-sectional models, with a center of the cross-sectional model being an origin of the coordinate system, and the arc being symmetrical about a y-axis of the coordinate system,

determine the line segment on a focal line, the line segment being equal in length to the arc and symmetrical about the y-axis, and the focal line being a line at which the focal plane intersects the cross-sectional model;

obtain a first auxiliary line by connecting an end point of the arc with an end point of the line segment on one side of the y-axis, and obtain a second auxiliary line by connecting another end point of the arc with another end point of the line segment on another side of the y-axis;

take an intersection point of the first auxiliary line and the second auxiliary line on the y-axis as an observation point $y_1$; and

obtain an equation representing the preset relationship based on the observation point $y_1$ and a radius R of the cross-sectional model:

$$\left(1 + \frac{(R+y_1)^2}{x'^2}\right) x^2 - \frac{2y_1(R+y_1)}{x'} x = R^2 - y_1^2,$$

where x represents an x coordinate of each point of the arc, and x' represents an x coordinate of each point of the line segment.

A system for establishing a photovoltaic power station by identifying a barcode is provided. The system includes: a cloud service system, a storage system, and the device for identifying a barcode on a curved surface according to any one of the above embodiments.

The cloud service system is configured to process identification information uploaded by the device for identifying a barcode on a curved surface, and send processed information to the storage system.

The storage system is configured to store the processed information for the cloud service system to call.

In an embodiment, the device for identifying a barcode on a curved surface is a mobile terminal.

With the method for identifying a barcode on a curved surface according to the present disclosure, a mathematical model is established for the barcode on the curved surface and the object to which the barcode on the curved surface is attached; arcs of the barcode on the curved surface on cross sections of the mathematical model are mapped to line segments on a focal plane of the device for identifying a barcode on a curved surface respectively according to a preset relationship and in an order in which the barcode on the curved surface is scanned, to obtain an image of the barcode on the curved surface on the focal plane. Then, the image of the barcode on the curved surface is denoised to obtain a processed image. Finally, the processed image is of the barcode on the curved surface is identified. That is, the image for identification is located on the focal plane of the device for identifying a barcode on a curved surface, thereby avoiding the problem of blurred portions of the barcode on the curved surface when the barcode on the curved surface is scanned in the conventional technology.

## BRIEF DESCRIPTION OF THE DRAWINGS

The drawings to be used in the description of the embodiments of the disclosure or the conventional technology will be described briefly as follows, so that the technical solutions according to the embodiments of the present disclosure or according to the conventional technology will become clearer. It is apparent that the drawings in the following description only illustrate some embodiments of the present disclosure. For those skilled in the art, other drawings may be obtained according to these drawings without any creative work.

Figure 1 is a flow chart of a method for identifying a barcode on a curved surface according to an embodiment of the present disclosure;

Figure 2 is schematic diagram of a three-dimensional model of a barcode on a curved surface and an object to which the barcode on the curved surface is attached according to an embodiment of the present disclosure;

Figure 3 is schematic diagram of a cross-sectional model of a barcode on a curved surface and an object to which the barcode on the curved surface is attached according to an embodiment of the present disclosure;

Figure 4 is a flow chart of a part of a method for identifying a barcode on a curved surface according to an embodiment of the present disclosure; and

Figure 5 is a schematic structural diagram of a device for identifying a barcode on a curved surface according to an embodiment of the present disclosure.

## DETAILED DESCRIPTION OF THE EMBODIMENTS

Technical solutions according to embodiments of the present disclosure are described clearly and completely hereinafter in conjunction with drawings used in the embodiments of the present disclosure. Apparently, the described embodiments are only some embodiments of the present disclosure rather than all the embodiments. Any other embodiments obtained by those skilled in the art based on the embodiments of the present disclosure without any creative work fall in the scope of protection of the present disclosure.

A method for identifying a barcode on a curved surface is provided according to the present disclosure, to solve the problem of blurred portions of the barcode on the curved surface when the barcode on the curved surface is scanned in the conventional technology.

The barcode on the curved surface may be a one-dimensional code or a two-dimensional code attached to a curved surface of an object. The code system of the barcode can be determined according to the actual application environment, and is within the protection scope of the present disclosure.

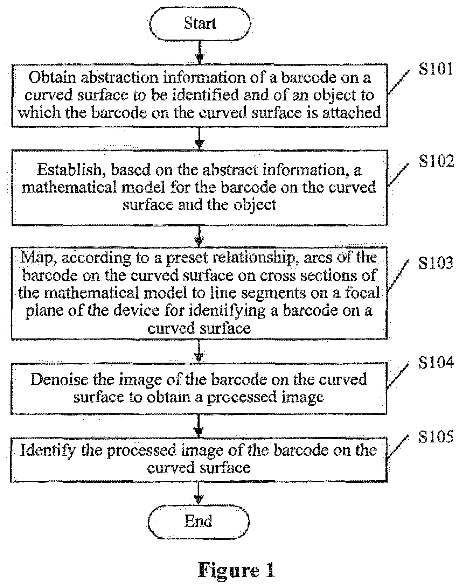

The method for identifying a barcode on a curved surface is applied to a device for identifying a barcode on a curved surface. Referring to Figure 1, the method for identifying a barcode on a curved surface includes the following steps S101 to S105.

In step S101, abstraction information of a barcode on a curved surface to be identified and of an object to which the barcode on the curved surface is attached is obtained.

In an embodiment, the abstract information may include: a shape, a size, or a ratio of length to width of the barcode on the curved surface and the object. Any information that can characterize the barcode on the curved surface and the object to which the barcode on the curved surface is attached, for establishing a mathematical model in the next step, is within the protection scope of the present disclosure.

In step S102, a mathematical model is established for the barcode on the curved surface and the object to which the barcode on the curved surface is attached, based on the abstract information.

The mathematical model may include: a three-dimensional model and N cross-sectional models of the barcode on the curved surface and the object to which the barcode on the curved surface is attached, where N is a positive integer, N=Z/z, Z represents a height of the barcode on the curved surface on the three-dimensional model in a direction perpendicular to the cross sections, and z represents a height of each of the N cross-sectional models in the direction perpendicular to the cross sections.

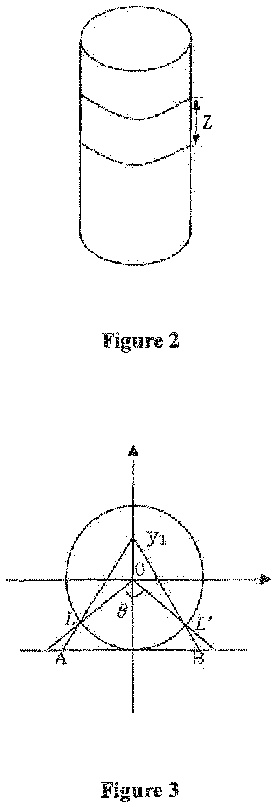

Referring to Figure 2 and Figure 3, Figure 2 is schematic diagram of a three-dimensional model of a barcode on a curved surface and an object to which the barcode on the curved surface is attached. Figure 2 shows the height Z of the barcode on the curved surface on the three-dimensional model. The height of the three-dimensional model and the height Z may be obtained by scaling down the abstract information, and are not limited to the actual height of the barcode on the curved surface. Figure 3 is schematic diagram of one of the cross-sectional models of the barcode on the curved surface and the object to which the barcode on the curved surface is attached. The height z of the cross-sectional model is not shown in Figure 3, and may be determined according to the scanning resolution of the device for identifying a barcode on a curved surface, which is not specifically limited herein, and is within the protection scope of the present disclosure.

In step S103, arcs of the barcode on the curved surface on cross sections of the mathematical model are mapped to line segments on a focal plane of the device for identifying a barcode on a curved surface respectively according to a preset relationship and in an order in which the barcode on the curved surface is scanned, to obtain an image of the barcode on the curved surface on the focal plane.

The barcode may be scanned from top to bottom, or from bottom to top, and the first scanned position is not limited to one end corresponding to a selected order. That is, the barcode may be scanned in an order which is determined according to the specific application environment. All solutions for implementing the scanning function are within the protection scope of the present disclosure.

In order to avoid the problem of a blurred portion of a barcode on a curved surface when the barcode is scanned in the conventional technology, the scanned barcode is required to be focused on a focal plane of the device for identifying a barcode on a curved surface, such that the barcode can be identified. In this embodiment, the three-dimensional model of the barcode on the curved surface is divided to obtain N cross-sectional models according to the scanning resolution of the device for identifying a barcode on a curved surface, and the arc of the barcode on the curved surface on each of the N cross-sectional models is mapped to the focal plane of the device for identifying a barcode on a curved surface, to obtain an image of the barcode on the curved surface on the focal plane of the device for identifying a barcode on a curved surface, such that the image of the barcode on the curved surface can be identified by the device for identifying a barcode on a curved surface.

In step S104, the image of the barcode on the curved surface is denoised to obtain a processed image.

S105, the processed image of the barcode on the curved surface is identified.

The denoising processing and the process of scanning and identification above are the same as those in the conventional technology, and are not described here again.

With the method for identifying a barcode on a curved surface according to this embodiment, the barcode on the curved surface is mapped to an image of the barcode on the curved surface on the focal plane of the device for identifying a barcode on a curved surface by the above processing, and the image of the barcode on the curved surface satisfies the identification focus condition of the device for identifying a barcode on a curved surface, thereby avoiding the problem of the blurred portion of the barcode on the curved surface when the barcode on the curved surface is scanned in the conventional technology.

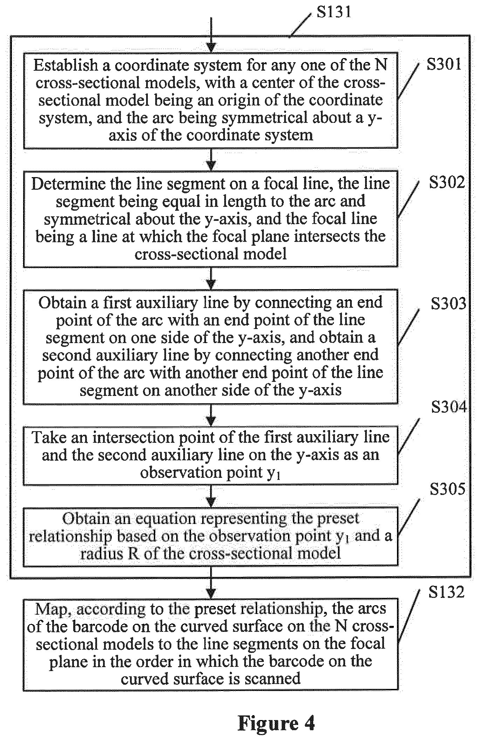

According to another embodiment of the present disclosure, a method for identifying a barcode on a curved surface is further provided. Referring to Figure 4, based on the above embodiment and Figures 1 to 3, preferably, the step S103 of mapping arcs of the barcode on the curved surface on cross sections of the mathematical model to line segments on a focal plane of the device for identifying a barcode on a curved surface respectively according to a preset relationship and in an order in which the barcode on the curved surface is scanned, includes the following steps S131 and S132.

In step S131, a coordinate system is established for each of the N cross-sectional models, auxiliary lines are added for the cross-sectional model, and the preset relationship is calculated.

As shown in Figure 4, step S131 includes steps the following steps S301 to S305.

In step S301, a coordinate system is established for any one of the N cross-sectional models, with the center of the cross-sectional model being the coordinate origin, and the arc being symmetrical about the y-axis.

The any one of the N cross-sectional models mentioned above may be the first cross-sectional model scanned by the device for identifying a barcode on a curved surface, which is not limited herein. Any one of the N cross-sectional models determined according to the actual application environment is within the protection scope of the present disclosure.

As shown in Figure 3, the coordinate system has the center O as the origin, LL' is the arc of the barcode on the curved surface on the cross-sectional model, and θ is the central angle of the arc.

In step S302, a line segment on a focal line is determined. The line segment is equal in length to the arc and symmetrical about the y-axis. The focal line is a line where the focal plane intersects the cross sectional model.

Take the cross-sectional model shown in Figure 3 as an example, to satisfy the identification focus condition of the device for identifying a barcode on a curved surface, a line segment AB on a straight line which is tangent to the arc and perpendicular to the y-axis, that is, on the focal line, is determined. Since the barcode image carries information, the barcode on the curved surface is projected with the size unchanged. First, the length of the arc LL' is calculated, then a line segment AB having a length that is equal to the length of the arc is determined, that is, the arc LL' is projected to the line segment AB, thereby ensuring that the barcode image obtained by the mapping has the same size as the original barcode on the curved surface, such that the degree of distortion due to mapping can be reduced.

In step S303, a first auxiliary line is obtained by connecting an end point of the arc with an end point of the line segment on one side of the y-axis, and a second auxiliary line is obtained by connecting another end point of the arc with another end point of the line segment on another side of the y-axis.

In Figure 3, a point L is mapped to a point A, and a point L' is mapped to a point B.

In step S304, an intersection point of the first auxiliary line and the second auxiliary line on the y-axis is taken as an observation point $y_1$.

Straight lines where the line segment AL and the line segment BL' are respectively located intersects at the intersection point $y_1$ on the y-axis, and the arc LL' is mapped to the line segment AB with the intersection point $y_1$ as an observation point.

In step S305, based on the observation point $y_1$ and the radius R of the cross-sectional model, the preset relationship represented by the following equation is obtained:

$$(1 + \frac{(R + y_1)^2}{x'^2}) \; x^2 - \frac{2 y_1 (R + y_1)}{x'} x = R^2 - y_1^2,$$

where x represents an x coordinate of each point of the arc, and x' represents an x coordinate of each point of the line segment.

Based on step S302 and the cross-sectional model shown in Figure 3, each point (x, y) on the arc LL' is mapped to a corresponding point (x', -R) on the line segment AB, to obtain the above equation. Moreover, it can be derived from the above equation that x and x' have the above mapping relationship.

In step S132, arcs of the barcode on the curved surface on the N cross-sectional models are mapped to line segments on the focal plane in the order in which the barcode on the curved surface is scanned.

The order in which the barcode on the curved surface is scanned may be randomly determined. The scanning may start from an arc which is scanned immediately after the preset relationship is obtained, or may start from an end of the barcode on the curved surface. The order of scanning determined according to specific application environments is within the protection scope of the present disclosure.

It should be noted that due to the distortion of the barcode on the curved surface in the conventional technology, it is difficult to identify the barcode on the curved surface when the barcode on the curved surface is scanned, increasing the difficulty and complexity of barcode identification. With the method for identifying a barcode on a curved surface according to this embodiment, it is ensured that the image of the barcode obtained by the mapping has the same size as the barcode on the curved surface, reducing the degree of distortion due to mapped, thereby solving the problem that the barcode on the curved surface is difficult to be identified when being scanned due to partial distortion of the barcode on the curved surface.

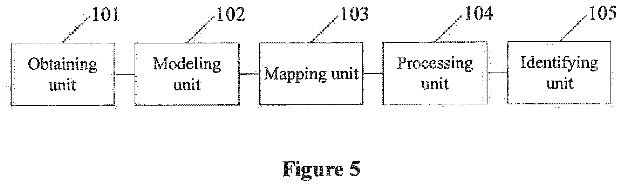

According to another embodiment of the present disclosure, a device for identifying a barcode on a curved surface is further provided. As shown in Figure 5, the device for identifying a barcode on a curved surface includes an obtaining unit 101, a modeling unit 102, a mapping unit 103, a processing unit 104, and an identifying unit 105.

The obtaining unit 101 is configured to obtain abstraction information of a barcode on a curved surface to be identified and of an object to which the barcode on the curved surface is attached.

The modeling unit 102 is configured to establish a mathematical model for the barcode on the curved surface and the object to which the barcode on the curved surface is attached based on the abstract information.

The mapping unit 103 is configured to map arcs of the barcode on the curved surface on cross sections of the mathematical model to line segments on a focal plane of the device for identifying a barcode on a curved surface respectively according to a preset relationship and in an order in which the barcode on the curved surface is scanned, to obtain an image of the barcode on the curved surface on the focal plane.

The processing unit 104 is configured to denoise the image of the barcode on the curved surface to obtain a processed image.

The identifying unit 105 is configured to identify the processed image of the barcode on the curved surface.

In an embodiment, the mathematical model includes: a three-dimensional model and N cross-sectional models of the barcode on the curved surface and the object to which the barcode on the curved surface is attached, where N is a positive integer, N=Z/z, Z represents a height of the barcode on the curved surface on the three-dimensional model in a direction perpendicular to the cross sections, and z represents a height of each of the N cross-sectional models in the direction perpendicular to the cross sections.

In an embodiment, the mapping unit 103 includes a calculating module and a mapping module.

The calculating module is configured to establish a coordinate system for any one of the N cross-sectional models, add auxiliary lines for the cross-sectional model, and calculate the preset relationship.

The mapping module is configured to map the arcs of the barcode on the curved surface on the N cross-sectional models to the line segments on the focal plane according to the preset relationship and in the order in which the barcode on the curved surface is scanned.

In an embodiment, the calculating module being configured to establish a coordinate system for any one of the N cross-sectional models, adding auxiliary lines for the cross-sectional model, and calculating the preset relationship, includes the calculating module being configured to:

establish a coordinate system for any one of the N cross-sectional models, with a center of the cross-sectional model being an origin of the coordinate system, and the arc being symmetrical about a y-axis of the coordinate system,

determine the line segment on a focal line, the line segment being equal in length to the arc and symmetrical about the y-axis, and the focal line being a line at which the focal plane intersects the cross-sectional model,

obtain a first auxiliary line by connecting an end point of the arc with an end point of the line segment on one side of the y-axis, and obtain a second auxiliary line by connecting another end point of the arc with another end point of the line segment on another side of the y-axis,

take an intersection point of the first auxiliary line and the second auxiliary line on the y-axis as an observation point $y_1$, and

obtain the following equation representing the preset relationship based on the observation point $y_1$ and a radius R of the cross-sectional model:

$$\left(1 + \frac{(R + y_1)^2}{x'^2}\right) x^2 - \frac{2 y_1 (R + y_1)}{x'} x = R^2 - y_1^2,$$

where x represents an x coordinate of each point of the arc, and x' represents an x coordinate of each point of the line segment.

The principle is the same as the above method embodiments, and is not repeatedly described.

According to another embodiment of the present disclosure, a system for establishing a photovoltaic power station by identifying a barcode, such as a system for establishing a photovoltaic power station by identifying a barcode of a photovoltaic power station adopting smart operation and maintenance, is provided. The system includes a cloud service system, a storage system, and a device for identifying a barcode on a curved surface according to any of the above embodiments.

The function of the device for identifying a barcode on a curved surface is the same as that of the device for identifying a barcode on a curved surface described in the above embodiments, and is not repeatedly described.

It should be noted that, besides the functions described in the embodiments above, the device for identifying a barcode on a curved surface is further configured to upload identification information obtained by identifying the barcode to the cloud service system.

The cloud service system is configured to process the identification information uploaded by the device for identifying a barcode on a curved surface, and send the processed information to the storage system.

The storage system is configured to store the processed information for the cloud service system to call.

Preferably, the device for identifying a barcode on a curved surface is a mobile terminal.

With the system for establishing a photovoltaic power station by identifying a barcode according to this embodiment performing the above process, time required for establishing the station on the cloud platform can be greatly reduced, such that the station can be established with improved efficiency and improved user experience.

The various embodiments of the present disclosure are described in a progressive manner, and each embodiment focuses on differences from other embodiments, and the same or similar parts between the various embodiments may be referred to each other. For the device disclosed in the embodiments, since the principle is the same as the method disclosed in the embodiments, the description is relatively simple, and the relevant parts can be referred to the method part.

The above are only preferred embodiments of the present disclosure, and are not intended to limit the disclosure in any way. Although the present disclosure has been disclosed above in the preferred embodiments, it is not intended to limit the disclosure. Those skilled in the art, without departing from the technical solutions of the present disclosure, can make many possible variations and modifications to the technical solutions of the present disclosure by using the methods and technical contents disclosed above, or modify them into equivalent embodiments. These variations and modifications and equivalent embodiments also fall into the scope of the present disclosure.

## Claims

1. A method for identifying a barcode on a curved surface, applied to a device for identifying a barcode on a curved surface, comprising:

    obtaining (S101) abstract information of a barcode on a curved surface to be identified and of an object to which the barcode on the curved surface is attached, wherein the abstract information characterizes the barcode on the curved surface and the object to which the barcode on the curved surface is attached and is used for establishing a mathematical model;

establishing (S102), based on the abstract information, the mathematical model for the barcode on the curved surface and the object to which the barcode on the curved surface is attached, wherein the mathematical model comprises a three-dimensional model and N cross-sectional models of the barcode on the curved surface and the object to which the barcode on the curved surface is attached, N is a positive integer, N=Z/z, Z represents a height of the barcode on the curved surface on the three-dimensional model in a direction perpendicular to the cross sections, and z represents a height of each of the N cross-sectional models in the direction perpendicular to the cross sections;

mapping (S103), according to a preset relationship, arcs of the barcode on the curved surface on the N cross-sectional models to line segments on a focal plane of the device for identifying a barcode on a curved surface respectively in an order in which the barcode on the curved surface is scanned, to obtain an image of the barcode on the curved surface on the focal plane;

denoising (S104) the image of the barcode on the curved surface to obtain a processed image; and

identifying (S105) the processed image of the barcode on the curved surface.

2. The method for identifying a barcode on a curved surface according to claim 1, wherein the mapping, according to a preset relationship, arcs of the barcode on the curved surface on cross sections of the mathematical model to line segments on a focal plane of the device for identifying a barcode on a curved surface respectively in an order in which the barcode on the curved surface is scanned, comprises:

establishing (S131) a coordinate system for any one of the N cross-sectional models, adding auxiliary lines for the cross-sectional model, and calculating the preset relationship, and

mapping (S132), according to the preset relationship, the arcs of the barcode on the curved surface on the N cross-sectional models to the line segments on the focal plane in the order in which the barcode on the curved surface is scanned.

3. The method for identifying a barcode on a curved surface according to claim 2, wherein the establishing a coordinate system for any one of the N cross-sectional models, adding auxiliary lines for the cross-sectional model, and calculating the preset relationship, comprises:

establishing (S301) a coordinate system for any one of the N cross-sectional models, with a center of the cross-sectional model being an origin of the coordinate system, and the arc being symmetrical about a y-axis of the coordinate system,

determining (S302) the line segment on a focal line, the line segment being equal in length to the arc and symmetrical about the y-axis, and the focal line being a line at which the focal plane intersects the cross-sectional model,

obtaining (S303) a first auxiliary line by connecting an end point of the arc with an end point of the line segment on one side of the y-axis, and obtaining a second auxiliary line by connecting another end point of the arc with another end point of the line segment on another side of the y-axis,

taking (S304) an intersection point of the first auxiliary line and the second auxiliary line on the y-axis as an observation point $y_1$, and

obtaining (S305) an equation representing the preset relationship based on the observation point $y_1$ and a radius R of the cross-sectional model:

$$(1+\frac{(R+y_1)^2}{x'^2})\ x^2 - \frac{2y_1(R+y_1)}{x'}x = R^2 - y_1^2\ ,$$

wherein x represents an x coordinate of each point of the arc, and x' represents an x coordinate of each point of the line segment.

4. A device for identifying a barcode on a curved surface, comprising:
an obtaining unit (101) configured to obtain abstract information of a barcode on a curved surface to be identified and of an object to which the barcode on the curved surface is attached, wherein the abstract information characterizes the barcode on the curved surface and the object to which the barcode on the curved surface is attached and is used for establishing a mathematical model, **characterized in that** the device further comprises:

a modeling unit (102) configured to establish, based on the abstract information, a mathematical model for the barcode on the curved surface and the object to which the barcode on the curved surface is attached, wherein the mathematical model comprises a three-dimensional model and N cross-sectional models of the barcode on the curved surface and the object to which the barcode on the curved surface is attached, N is a positive integer, N=Z/z, Z represents a height of the barcode on the curved surface on the three-dimensional model in a direction perpendicular to the cross sections, and z represents a height of each of the N cross-sectional models in the direction perpendicular to the cross sections;

a mapping unit (103) configured to map, according to a preset relationship, arcs of the barcode on the curved surface on the N cross-sectional models to line segments on a focal plane of the device for identifying a barcode on a curved surface respectively in an order in which the barcode on the curved surface is scanned, to obtain an image of the barcode on the curved surface on the focal plane;

a processing unit (104) configured to denoise the image of the barcode on the curved surface to obtain a processed image; and

an identifying unit (105) configured to identify the processed image of the barcode on the curved surface.

5. The device for identifying a barcode on a curved surface according to claim 4, wherein the mapping unit comprises:

a calculating module configured to establish a coordinate system for any one of the N cross-sectional models, add auxiliary lines for the cross-sectional model, and calculate the preset relationship, and

a mapping module configured to map, according to the preset relationship, the arcs of the barcode on the curved surface on the N cross-sectional models to the line segments on the focal plane in the order in which the barcode on the curved surface is scanned.

6. The device for identifying a barcode on a curved surface according to claim 5, wherein the calculating module being configured to establish a coordinate system for any one of the N cross-sectional models, adding auxiliary lines for the cross-sectional model, and calculating the preset relationship, comprises the calculating module being configured to:

establish a coordinate system for any one of the N cross-sectional models, with a center of the cross-sectional model being an origin of the coordinate system, and the arc being symmetrical about a y-axis of the coordinate system,

determine the line segment on a focal line, the line segment being equal in length to the arc and symmetrical about the y-axis, and the focal line being a line at which the focal plane intersects the cross-sectional model,

obtain a first auxiliary line by connecting an end point of the arc with an end point of the line segment on one side of the y-axis, and obtain a second auxiliary line by connecting another end point of the arc with another end point of the line segment on another side of the y-axis,

take an intersection point of the first auxiliary line and the second auxiliary line on the y-axis as an observation point $y_1$, and

obtain an equation representing the preset relationship based on the observation point $y_1$ and a radius R of the cross-sectional model:

$$\left(1+\frac{(R+y_1)^2}{x'^2}\right) x^2 - \frac{2y_1(R+y_1)}{x'} x = R^2 - y_1^2 ,$$

wherein x represents an x coordinate of each point of the arc, and x' represents an x coordinate of each point of the line segment.

7. A system for establishing a photovoltaic power station by identifying a barcode, comprising:

a cloud service system;

a storage system; and

the device for identifying a barcode on a curved surface according to any one of claims 4 to 6, wherein the cloud service system is configured to process identification information uploaded by the device for identifying a barcode on a curved surface, and send processed information to the storage system, and

the storage system is configured to store the processed information for the cloud service system to call.

8. The system for establishing a photovoltaic power station by identifying a barcode according to claim 7, wherein the device for identifying a barcode on a curved surface is a mobile terminal.

**Patentansprüche**

1.  Verfahren zum Identifizieren eines Strichcodes auf einer gekrümmten Oberfläche, angewendet auf eine Vorrichtung zum Identifizieren eines Strichcodes auf einer gekrümmten Oberfläche, Folgendes umfassend:

    Erhalten (S101) von abstrakten Informationen eines zu identifizierenden Strichcodes auf einer gekrümmten Oberfläche und eines Objekts, an dem der Strichcode auf der gekrümmten Oberfläche angebracht ist, wobei die abstrakten Informationen den Strichcode auf der gekrümmten Oberfläche und das Objekt, an dem der Strichcode auf der gekrümmten Oberfläche angebracht ist, kennzeichnen und zum Herstellen eines mathematischen Modells verwendet werden;
    Herstellen (S102), basierend auf den abstrakten Informationen, des mathematischen Modells für den Strichcode auf der gekrümmten Oberfläche und das Objekt, an dem der Strichcode auf der gekrümmten Oberfläche angebracht ist, wobei das mathematische Modell ein dreidimensionales Modell und N Querschnittsmodelle des Strichcodes auf der gekrümmten Oberfläche und des Objekts, an dem der Strichcode auf der gekrümmten Oberfläche angebracht ist, umfasst, N eine positive ganze Zahl ist, N=Z/z, Z eine Höhe des Strichcodes auf der gekrümmten Oberfläche an dem dreidimensionalen Modell in einer Richtung senkrecht zu den Querschnitten darstellt und z eine Höhe jedes der N Querschnittsmodelle in der Richtung senkrecht zu den Querschnitten darstellt;
    Abbilden (S103), gemäß einer voreingestellten Beziehung, von Bögen des Strichcodes auf der gekrümmten Oberfläche an den N Querschnittsmodellen auf Liniensegmente auf einer Fokusebene der Vorrichtung zum Identifizieren eines Strichcodes auf einer gekrümmten Oberfläche jeweils in einer Reihenfolge, in der der Strichcode auf der gekrümmten Oberfläche gescannt wird, um ein Bild des Strichcodes auf der gekrümmten Oberfläche auf der Fokusebene zu erhalten;
    Entrauschen (S104) des Bildes des Strichcodes auf der gekrümmten Oberfläche, um ein verarbeitetes Bild zu erhalten; und
    Identifizieren (S105) des verarbeiteten Bildes des Strichcodes auf der gekrümmten Oberfläche.

2.  Verfahren zum Identifizieren eines Strichcodes auf einer gekrümmten Oberfläche nach Anspruch 1, wobei das Abbilden, gemäß einer voreingestellten Beziehung, von Bögen des Strichcodes auf der gekrümmten Oberfläche an Querschnitten des mathematischen Modells auf Liniensegmente auf einer Fokusebene der Vorrichtung zum Identifizieren eines Strichcodes auf einer gekrümmten Oberfläche jeweils in einer Reihenfolge, in der der Strichcode auf der gekrümmten Oberfläche gescannt wird, Folgendes umfasst:

    Herstellen (S131) eines Koordinatensystems für ein beliebiges der N Querschnittsmodelle, Hinzufügen von Hilfslinien für das Querschnittsmodell und Berechnen der voreingestellten Beziehung und
    Abbilden (S132), gemäß der voreingestellten Beziehung, der Bögen des Strichcodes auf der gekrümmten Oberfläche an den N Querschnittsmodellen auf die Liniensegmente auf der Fokusebene in der Reihenfolge, in der der Strichcode auf der gekrümmten Oberfläche gescannt wird.

3.  Verfahren zum Identifizieren eines Strichcodes auf einer gekrümmten Oberfläche nach Anspruch 2, wobei das Herstellen eines Koordinatensystems für ein beliebiges der N Querschnittsmodelle, das Hinzufügen von Hilfslinien für das Querschnittsmodell und das Berechnen der voreingestellten Beziehung Folgendes umfasst:

    Herstellen (S301) eines Koordinatensystems für ein beliebiges der N Querschnittsmodelle, wobei ein Mittelpunkt des Querschnittsmodells ein Ursprung des Koordinatensystems ist und der Bogen symmetrisch um eine y-Achse des Koordinatensystems ist,
    Bestimmen (S302) des Liniensegments auf einer Fokuslinie, wobei das Liniensegment gleich lang wie der Bogen und symmetrisch um die y-Achse ist und die Fokuslinie eine Linie ist, an der die Fokusebene das Querschnittsmodell schneidet,
    Erhalten (S303) einer ersten Hilfslinie durch Verbinden eines Endpunkts des Bogens mit einem Endpunkt des Liniensegments auf einer Seite der y-Achse und Erhalten einer zweiten Hilfslinie durch Verbinden eines anderen Endpunkts des Bogens mit einem anderen Endpunkt des Liniensegments auf einer anderen Seite der y-Achse,
    Verwenden (S304) eines Schnittpunkts der ersten Hilfslinie und der zweiten Hilfslinie auf der y-Achse als Beobachtungspunkt $y_1$ und
    Erhalten (S305) einer Gleichung, die die voreingestellte Beziehung basierend auf dem Beobachtungspunkt $y_1$

und einem Radius R des Querschnittsmodells darstellt:

$$\left(1+\frac{(R+y_1)^2}{x'^2}\right)\, x^2 - \frac{2y_1(R+y_1)}{x'} x = R^2 - y_1^2 \,,$$

wobei x eine x-Koordinate jedes Punktes des Bogens darstellt und x' eine x-Koordinate jedes Punktes des Liniensegments darstellt.

4. Vorrichtung zum Identifizieren eines Strichcodes auf einer gekrümmten Oberfläche, Folgendes umfassend:
eine Erhaltungseinheit (101), die zum Erhalten von abstrakten Informationen eines zu identifizierenden Strichcodes auf einer gekrümmten Oberfläche und eines Objekts, an dem der Strichcode auf der gekrümmten Oberfläche angebracht ist, konfiguriert ist, wobei die abstrakten Informationen den Strichcode auf der gekrümmten Oberfläche und das Objekt, an dem der Strichcode auf der gekrümmten Oberfläche angebracht ist, kennzeichnen und zum Herstellen eines mathematischen Modells verwendet werden, **dadurch gekennzeichnet, dass** die Vorrichtung ferner Folgendes umfasst:

eine Modellierungseinheit (102), die zum Herstellen, basierend auf den abstrakten Informationen, eines mathematischen Modells für den Strichcode auf der gekrümmten Oberfläche und das Objekt, an dem der Strichcode auf der gekrümmten Oberfläche angebracht ist, konfiguriert ist, wobei das mathematische Modell ein dreidimensionales Modell und N Querschnittsmodelle des Strichcodes auf der gekrümmten Oberfläche und des Objekts, an dem der Strichcode auf der gekrümmten Oberfläche angebracht ist, umfasst, N eine positive ganze Zahl ist, N=Z/z, Z eine Höhe des Strichcodes auf der gekrümmten Oberfläche an dem dreidimensionalen Modell in einer Richtung senkrecht zu den Querschnitten darstellt und z eine Höhe jedes der N Querschnittsmodelle in der Richtung senkrecht zu den Querschnitten darstellt;
eine Abbildungseinheit (103), die konfiguriert ist, gemäß einer voreingestellten Beziehung Bögen des Strichcodes auf der gekrümmten Oberfläche an den N Querschnittsmodellen auf Liniensegmente auf einer Fokusebene der Vorrichtung zum Identifizieren eines Strichcodes auf einer gekrümmten Oberfläche jeweils in einer Reihenfolge abzubilden, in der der Strichcode auf der gekrümmten Oberfläche gescannt wird, um ein Bild des Strichcodes auf der gekrümmten Oberfläche auf der Fokusebene zu erhalten;
eine Verarbeitungseinheit (104), die konfiguriert ist, um das Bild des Strichcodes auf der gekrümmten Oberfläche zu entrauschen, um ein verarbeitetes Bild zu erhalten; und
eine Identifizierungseinheit (105), die konfiguriert ist, um das verarbeitete Bild des Strichcodes auf der gekrümmten Oberfläche zu identifizieren.

5. Vorrichtung zum Identifizieren eines Strichcodes auf einer gekrümmten Oberfläche nach Anspruch 4, wobei die Abbildungseinheit Folgendes umfasst:

ein Berechnungsmodul, das zum Herstellen eines Koordinatensystems für ein beliebiges der N Querschnittsmodelle, Hinzufügen von Hilfslinien für das Querschnittsmodell und Berechnen der voreingestellten Beziehung konfiguriert ist, und
ein Abbildungsmodul, das zum Abbilden, gemäß der voreingestellten Beziehung, der Bögen des Strichcodes auf der gekrümmten Oberfläche an den N Querschnittsmodellen auf die Liniensegmente auf der Fokusebene in der Reihenfolge, in der der Strichcode auf der gekrümmten Oberfläche gescannt wird, konfiguriert ist.

6. Vorrichtung zum Identifizieren eines Strichcodes auf einer gekrümmten Oberfläche nach Anspruch 5, wobei das Berechnungsmodul zum Herstellen eines Koordinatensystems für ein beliebiges der N Querschnittsmodelle, das Hinzufügen von Hilfslinien für das Querschnittsmodell und das Berechnen der voreingestellten Beziehung konfiguriert ist, wobei das Berechnungsmodul zu Folgendem konfiguriert ist:

Herstellen eines Koordinatensystems für ein beliebiges der N Querschnittsmodelle, wobei ein Mittelpunkt des Querschnittsmodells ein Ursprung des Koordinatensystems ist und der Bogen symmetrisch um eine y-Achse des Koordinatensystems ist,
Bestimmen des Liniensegments auf einer Fokuslinie, wobei das Liniensegment gleich lang wie der Bogen und symmetrisch um die y-Achse ist und die Fokuslinie eine Linie ist, an der die Fokusebene das Querschnittsmodell schneidet,
Erhalten einer ersten Hilfslinie durch Verbinden eines Endpunkts des Bogens mit einem Endpunkt des Liniensegments auf einer Seite der y-Achse und Erhalten einer zweiten Hilfslinie durch Verbinden eines anderen Endpunkts des Bogens mit einem anderen Endpunkt des Liniensegments auf einer anderen Seite der y-Achse, Verwenden eines Schnittpunkts der ersten Hilfslinie und der zweiten Hilfslinie auf der y-Achse als Beobachtungspunkt $y_1$ und

Erhalten einer Gleichung, die die voreingestellte Beziehung basierend auf dem Beobachtungspunkt $y_1$ und einem Radius R des Querschnittsmodells darstellt:

$$\left(1+\frac{(R+y_1)^2}{x'^2}\right)\ x^2 - \frac{2y_1(R+y_1)}{x'}x = R^2 - y_1^2,$$

wobei x eine x-Koordinate jedes Punktes des Bogens darstellt und $x'$ eine x-Koordinate jedes Punktes des Liniensegments darstellt.

7.  System zum Herstellen einer fotovoltaischen Leistungsstation durch Identifizieren eines Strichcodes, Folgendes umfassend:

ein Cloud-Dienstsystem;
ein Speichersystem; und
die Vorrichtung zum Identifizieren eines Strichcodes auf einer gekrümmten Oberfläche nach einem der Ansprüche 4 bis 6, wobei
das Cloud-Dienstsystem konfiguriert ist, Identifikationsinformationen zu verarbeiten, die durch die Vorrichtung zum Identifizieren eines Strichcodes auf einer gekrümmten Oberfläche hochgeladen wurden, und verarbeitete Informationen an das Speichersystem zu senden, und
das Speichersystem konfiguriert ist, die verarbeiteten Informationen für das Cloud-Dienstsystem zum Aufrufen zu speichern.

8.  System zum Herstellen einer fotovoltaischen Leistungsstation durch Identifizieren eines Strichcodes nach Anspruch 7, wobei die Vorrichtung zum Identifizieren eines Strichcodes auf einer gekrümmten Oberfläche ein mobiles Endgerät ist.

## Revendications

1.  Procédé d'identification d'un code à barres sur une surface incurvée, appliqué à un dispositif d'identification d'un code à barres sur une surface incurvée, comprenant de :

l'obtention (S101) d'informations abstraites d'un code à barres sur une surface incurvée à identifier et d'un objet auquel le code à barres sur la surface incurvée est fixé, les informations abstraites caractérisant le code à barres sur la surface incurvée et l'objet auquel le code à barres sur la surface incurvée est fixé et étant utilisé pour établir un modèle mathématique ;
l'établissement (S102), sur la base des informations abstraites, du modèle mathématique pour le code à barres sur la surface incurvée et l'objet auquel le code à barres sur la surface incurvée est fixé, le modèle mathématique comprenant un modèle tridimensionnel et N modèles de section transversale du code à barres sur la surface incurvée et de l'objet auquel le code à barres sur la surface incurvée est fixé, N étant un nombre entier positif, N = Z/z, Z représentant une hauteur du code à barres sur la surface incurvée sur le modèle tridimensionnel dans une direction perpendiculaire aux sections transversales, et z représentant une hauteur de chacun des N modèles de section transversale dans la direction perpendiculaire aux sections transversales ;
le mappage (S103), selon une relation prédéfinie, d'arcs du code à barres sur la surface incurvée sur les N modèles de section transversale à des segments de ligne sur un plan focal du dispositif pour identifier un code à barres sur une surface incurvée respectivement dans un ordre dans lequel le code à barres sur la surface incurvée est balayé, pour obtenir une image du code à barres sur la surface incurvée sur le plan focal ;
le débruitage (S104) de l'image du code à barres sur la surface incurvée pour obtenir une image traitée ; et
l'identification (S105) de l'image traitée du code à barres sur la surface incurvée.

2.  Procédé d'identification d'un code à barres sur une surface incurvée selon la revendication 1, dans lequel

le mappage, selon une relation prédéfinie, d'arcs du code à barres sur la surface incurvée sur des sections transversales du modèle mathématique à des segments de ligne sur un plan focal du dispositif d'identification d'un code à barres sur une surface incurvée respectivement dans un ordre dans lequel le code à barres sur la surface incurvée est balayé, comprend ;

l'établissement (S131) d'un système de coordonnées pour l'un quelconque des N modèles de section transversale, l'ajout de lignes auxiliaires pour le modèle de section transversale, et le calcul de la relation prédéfinie, et le mappage (S132), selon la relation prédéfinie, des arcs du code à barres sur la surface incurvée sur les N modèles de section transversale à des segments de ligne sur le plan focal dans l'ordre dans lequel le code à barres sur la surface incurvée est balayé.

3. Procédé d'identification d'un code à barres sur une surface incurvée selon la revendication 2, dans lequel l'établissement d'un système de coordonnées pour l'un quelconque des N modèles de section transversale, l'ajout de lignes auxiliaires pour le modèle de section transversale, et le calcul de la relation prédéfinie, comprend :

l'établissement (S301) d'un système de coordonnées pour l'un quelconque des N modèles de section transversale, avec un centre du modèle de section transversale étant une origine du système de coordonnées, et l'arc étant symétrique autour d'un axe y du système de coordonnées,
la détermination (S302) du segment de ligne sur une ligne focale, le segment de ligne étant égal en longueur à l'arc et symétrique autour de l'axe y, et la ligne focale étant une ligne au niveau de laquelle le plan focal coupe le modèle de section transversale,
l'obtention (S303) d'une première ligne auxiliaire par connexion d'un point d'extrémité de l'arc avec un point d'extrémité du segment de ligne sur un côté de l'axe y, et l'obtention d'une deuxième ligne auxiliaire par connexion d'un autre point d'extrémité de l'arc avec un autre point d'extrémité du segment de ligne sur un autre côté de l'axe y,
la prise (S304) d'un point d'intersection de la première ligne auxiliaire et de la deuxième ligne auxiliaire sur l'axe y comme point d'observation $y_1$, et
l'obtention (S305) d'une équation représentant la relation prédéfinie basée sur le point d'observation $y_1$ et un rayon R du modèle en section transversale :

$$(1+\frac{(R+y_1)^2}{x'^2})\ x^2 - \frac{2y_1(R+y_1)}{x'}x = R^2 - y_1^2,$$

dans laquelle x représente une coordonnée x de chaque point de l'arc, et x' représente une coordonnée x de chaque point du segment de ligne.

4. Dispositif d'identification d'un code à barres sur une surface incurvée, comprenant :
une unité d'obtention (101) configurée pour obtenir des informations abstraites d'un code à barres sur une surface incurvée à identifier et d'un objet auquel le code à barres sur la surface incurvée est fixé, les informations abstraites caractérisant le code à barres sur la surface incurvée et l'objet auquel le code à barres sur la surface incurvée est fixé et étant utilisé pour établir un modèle mathématique, **caractérisé en ce que** le dispositif comprend en outre :

une unité de modélisation (102) configurée pour établir, sur la base des informations abstraites, un modèle mathématique pour le code à barres sur la surface incurvée et l'objet auquel le code à barres sur la surface incurvée est fixé, le modèle mathématique comprenant un modèle tridimensionnel et N modèles de section transversale du code à barres sur la surface incurvée et de l'objet auquel le code à barres sur la surface incurvée est fixé, N étant un nombre entier positif, N = Z/z, Z représentant une hauteur du code à barres sur la surface incurvée sur le modèle tridimensionnel dans une direction perpendiculaire aux sections transversales, et z représentant une hauteur de chacun des N modèles de section transversale dans la direction perpendiculaire aux sections transversales ;
une unité de mappage (103) configurée pour mapper, selon une relation prédéfinie, des arcs du code à barres sur la surface incurvée sur les N modèles de section transversale à des segments de ligne sur un plan focal du dispositif d'identification d'un code à barres sur une surface incurvée respectivement dans un ordre dans lequel le code à barres sur la surface incurvée est balayé, pour obtenir une image du code à barres sur la surface incurvée sur le plan focal ;
une unité de traitement (104) configurée pour débruiter l'image du code à barres sur la surface incurvée pour obtenir une image traitée ; et

une unité d'identification (S105) configurée pour identifier l'image traitée du code à barres sur la surface incurvée.

5. Dispositif d'identification d'un code à barres sur une surface incurvée selon la revendication 4, dans lequel l'unité de mappage comprend :

un module de calcul configuré pour établir un système de coordonnées pour l'un quelconque des N modèles de section transversale, ajouter des lignes auxiliaires pour le modèle de section transversale, et calculer la relation prédéfinie, et
un module de mappage configuré pour mapper, selon la relation prédéfinie, les arcs du code à barres sur la surface incurvée sur les N modèles de section transversale à des segments de ligne sur le plan focal dans l'ordre dans lequel le code à barres sur la surface incurvée est balayé.

6. Dispositif d'identification d'un code à barres sur une surface incurvée selon la revendication 5, dans lequel le module de calcul étant configuré pour établir un système de coordonnées pour l'un quelconque des N modèles de section transversale, ajouter des lignes auxiliaires pour le modèle de section transversale, et calculer de la relation prédéfinie, comprend le module de calcul étant configuré pour :

établir un système de coordonnées pour l'un quelconque des N modèles de section transversale, avec un centre du modèle de section transversale étant une origine du système de coordonnées, et l'arc étant symétrique autour d'un axe y du système de coordonnées,
déterminer le segment de ligne sur une ligne focale, le segment de ligne étant égal en longueur à l'arc et symétrique autour de l'axe y, et la ligne focale étant une ligne au niveau de laquelle le plan focal coupe le modèle de section transversale,
obtenir une première ligne auxiliaire par connexion d'un point d'extrémité de l'arc avec un point d'extrémité du segment de ligne sur un côté de l'axe y, et obtenir une deuxième ligne auxiliaire par connexion d'un autre point d'extrémité de l'arc avec un autre point d'extrémité du segment de ligne sur un autre côté de l'axe y,
prendre un point d'intersection de la première ligne auxiliaire et de la deuxième ligne auxiliaire sur l'axe y comme point d'observation $y_1$, et
obtenir une équation représentant la relation prédéfinie basée sur le point d'observation $y_1$ et un rayon R du modèle en section transversale :

$$\left(1+\frac{(R+y_1)^2}{x'^2}\right)\ x^2 - \frac{2y_1(R+y_1)}{x'}x = R^2 - y_1^2 \, ,$$

dans laquelle x représente une coordonnée x de chaque point de l'arc, et x' représente une coordonnée x de chaque point du segment de ligne.

7. Système d'établissement d'une station d'alimentation photovoltaïque par l'identification d'un code à barres, comprenant :

un système de service de réseau en nuage ;
un système de stockage ; et
le dispositif d'identification d'un code à barres sur une surface incurvée selon l'une quelconque des revendications 4 à 6, dans lequel le système de service de réseau en nuage est configuré pour traiter les informations d'identification téléchargées par le dispositif d'identification d'un code à barres sur une surface incurvée, et envoyer les informations traitées au système de stockage, et

le système de stockage est configuré pour stocker les informations traitées pour le système de service en nuage à appeler.

8. Système d'établissement d'une station d'alimentation photovoltaïque par l'identification d'un code à barres selon la revendication 7, dans lequel le dispositif d'identification d'un code à barres sur une surface incurvée est un terminal mobile.

```
            ┌──────────────┐
            (    Start     )
            └──────┬───────┘
                   ▼
┌─────────────────────────────────────────┐        S101
│ Obtain abstraction information of a      │      ╱
│ barcode on a curved surface to be        │
│ identified and of an object to which the │
│ barcode on the curved surface is attached│
└──────────────────┬──────────────────────┘
                   ▼
┌─────────────────────────────────────────┐        S102
│ Establish, based on the abstract         │      ╱
│ information, a mathematical model for the│
│ barcode on the curved surface and the    │
│ object                                   │
└──────────────────┬──────────────────────┘
                   ▼
┌─────────────────────────────────────────┐        S103
│ Map, according to a preset relationship, │      ╱
│ arcs of the barcode on the curved surface│
│ on cross sections of the mathematical    │
│ model to line segments on a focal plane  │
│ of the device for identifying a barcode  │
│ on a curved surface                      │
└──────────────────┬──────────────────────┘
                   ▼
┌─────────────────────────────────────────┐        S104
│ Denoise the image of the barcode on the  │      ╱
│ curved surface to obtain a processed     │
│ image                                    │
└──────────────────┬──────────────────────┘
                   ▼
┌─────────────────────────────────────────┐        S105
│ Identify the processed image of the      │      ╱
│ barcode on the curved surface            │
└──────────────────┬──────────────────────┘
                   ▼
            ┌──────────────┐
            (     End      )
            └──────────────┘
```

**Figure 1**

**Figure 2**

**Figure 3**

S131

Establish a coordinate system for any one of the N cross-sectional models, with a center of the cross-sectional model being an origin of the coordinate system, and the arc being symmetrical about a y-axis of the coordinate system — S301

Determine the line segment on a focal line, the line segment being equal in length to the arc and symmetrical about the y-axis, and the focal line being a line at which the focal plane intersects the cross-sectional model — S302

Obtain a first auxiliary line by connecting an end point of the arc with an end point of the line segment on one side of the y-axis, and obtain a second auxiliary line by connecting another end point of the arc with another end point of the line segment on another side of the y-axis — S303

Take an intersection point of the first auxiliary line and the second auxiliary line on the y-axis as an observation point $y_1$ — S304

Obtain an equation representing the preset relationship based on the observation point $y_1$ and a radius R of the cross-sectional model — S305

Map, according to the preset relationship, the arcs of the barcode on the curved surface on the N cross-sectional models to the line segments on the focal plane in the order in which the barcode on the curved surface is scanned — S132

**Figure 4**

```
  ┌─101        ┌─102         ┌─103        ┌─104           ┌─105
┌───────────┐ ┌───────────┐ ┌───────────┐ ┌───────────┐ ┌───────────┐
│ Obtaining │ │ Modeling  │ │Mapping unit│ │Processing │ │Identifying│
│ unit      │─│ unit      │─│           │─│ unit      │─│ unit      │
└───────────┘ └───────────┘ └───────────┘ └───────────┘ └───────────┘
```

**Figure 5**

**EP 3 674 965 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005150957 A1
- US 8413903 B1

- CN 104057719 A